# EUROPEAN PATENT APPLICATION

(11) **EP 1 679 695 A1**
(43) Date of publication of application: **12.07.2006**
(21) Application number: 06100070.9
(22) Date of filing: 04.01.2006
(51) Int. Cl.: G10L 15/22

(54) **A system and method for using a library to interactively design natural language spoken dialog systems**

(30) Priority: 05.01.2005 US 29317
(71) Applicant: AT&T Corp., New York, NY 10013-2412 (US)
(72) Inventor: Begeja, Lee, Gillette, NJ 07933 (US); Di Fabbrizio, Giuseppe, Florham Park, NJ 07932 (US); Gibbon, David Crawford, Lincroft, NJ 07738 (US); Liu, Zhu, Marlboro, NJ 07746 (US); Renger, Bernard S., New Providence, NJ 07974 (US); Shahraray, Behzad, Freehold, NJ 07728 (US); Tur, Gokhan, Denville, NJ 07834 (US)
(74) Representative: Harding, Richard Patrick

(57) **Abstract**

Aspects of the invention pertain to a system for using a library to interactively design natural language spoken dialog systems. The system may include a processing device and an extractor. The processing device may be configured to receive user input selections indicating ones of a group of spoken dialog data stored in a library. The extractor may be configured to extract the ones of the group of spoken dialog data and a model building module may be configured to build one of a Spoken Language Understanding (SLU) model or an Automatic Speech Recognition (ASR) model based on the extracted ones of the plurality of spoken dialog data.

## Description

### RELATED APPLICATIONS

The present invention is related to U.S. Patent Application No. (attorney docket no. 2004-0101), entitled "A LIBRARY OF EXISTING SPOKEN DIALOG DATA FOR USE IN GENERATING NEW NATURAL LANGUAGE SPOKEN DIALOG SYSTEMS," U.S. Patent Application No. 11/029,798, entitled "A SYSTEM OF PROVIDING AN AUTOMATED DATA-COLLECTION IN SPOKEN DIALOG SYSTEMS," and U.S. Patent Application No. (attorney docket no. 2004-0021), entitled "BOOTSTRAPPING SPOKEN DIALOG SYSTEMS WITH DATA REUSE." The above U.S. Patent Applications are filed concurrently herewith and the contents of the above U.S. Patent Applications are herein incorporated by reference in their entirety.

### BACKGROUND OF THE INVENTION

### Field of the Invention

The present invention relates to speech processing and more specifically to reusing existing spoken dialog data to generate a new natural language spoken dialog system.

### Introduction

Natural language spoken dialog systems receive spoken language as input, analyze the received spoken language input to derive meaning from the input, and perform some action, which may include generating speech, based on the meaning derived from the input. Building natural language spoken dialog systems requires large amounts of human intervention. For example, a number of recorded speech utterances may require manual transcription and labeling for the system to reach a useful level of performance for operational service. In addition, the design of such complex systems typically includes a human being, such as, a User Experience (UE) expert to manually analyze and define system core functionalities, such as, a system's semantic scope (call-types and named entities) and a dialog manager strategy, which will drive the human-machine interaction. This approach to building natural language spoken dialog systems is extensive and error prone because it involves the UE expert making non-trivial design decisions, the results of which can only be evaluated after the actual system deployment. Thus, a complex system may require the UE expert to define the system's core functionalities via several design cycles which may include defining or redefining the core functionalities, deploying the system, and analyzing the performance of the system. Moreover, scalability is compromised by time, costs and the high level of UE know-how needed to reach a consistent design. A new approach that reduces the amount of human intervention required to build a natural language spoken dialog system is desired.

Applications for natural language dialog systems have already been built. Some new applications may be able to benefit from the data accumulated from existing natural language dialog applications. An approach that reuses the data accumulated from existing natural language dialog applications to build new natural language dialog applications would greatly reduce the time, labor, and expense of building such a system.

### SUMMARY OF THE INVENTION

In a first aspect of the invention, a method is provided. User input indicating selections of spoken language dialog data may be received. The selections of spoken language dialog data may be extracted from a library of reusable spoken language dialog components. A Spoken Language Understanding (SLU) model or an Automatic Speech Recognition (ASR) model may be built based on the selected spoken language dialog data.

In a second aspect of the invention, a system for reusing spoken dialog components is provided. The system may include a processing device, an extractor, and a model building module. The processing device may be configured to receive user input selections indicating ones of a group of spoken dialog data stored in a library. The extractor may be configured to extract the ones of the group of spoken dialog data and a model building module may be configured to build one of a SLU model or an ASR model based on the extracted ones of the plurality of spoken dialog data.

In a third aspect of the invention, a machine-readable medium is provided. The machine-readable medium may include, recorded thereon, a set of instructions for receiving user input indicating selections of spoken language dialog data from a library, a set of instructions for extracting the selections of spoken language dialog data from the library, and a set of instructions for building at least one of an Automatic Speech Recognition (ASR) model or a SLU model based on the selected spoken language dialog data.

### BRIEF DESCRIPTION OF THE DRAWINGS

The accompanying drawings, which are incorporated in and constitute a part of this specification, illustrate an embodiment of the invention and, together with the description, explain the invention. In the drawings,

Fig. 1 shows an exemplary system consistent with principles of the invention;

Fig. 2 illustrates an exemplary processing system which may be used to implement one or more components of the exemplary system of Fig. 1;

Fig. 3 illustrates an exemplary architecture of a library that may be used with implementations consistent with the principles of the invention;

Fig. 4 is an exemplary display that may be used for indicating spoken dialog data to be extracted from a library; and

Fig. 5 is a flowchart that illustrates exemplary processing that may be performed in implementations consistent with the principles of the invention.

### DETAILED DESCRIPTION OF THE INVENTION

Various embodiments of the invention are discussed in detail below. While specific implementations are discussed, it should be understood that this is done for illustration purposes only. A person skilled in the relevant art will recognize that other components and configurations may be used without parting from the spirit and scope of the invention.

### Overview

Designing a new natural language spoken dialog system may require a great deal of human intervention. The first step may be collecting recordings of utterances from customers. These collected utterances may then be transcribed, either manually or via an ASR module. The transcribed utterances may provide a baseline for the types of requests (namely, the user's intent) that users make when they call. A UE expert working with a business customer, according to specific business rules and services requirements, may use either a spreadsheet or a text document to classify these calls into call-types. For example, the UE expert may classify or label input such as, for example, "I want a refund" as a REFUND call-type, and input such as, for example, "May I speak with an operator" as a GET_CUSTOMER_REP call-type. In this example, call-type is synonymous with label.

The end result of this process may be an annotation guide document that describes the semantic domain in terms of the types of calls that may be received and how to classify the calls. The annotation guide may be given to a group of "labelers" who are individuals trained to label thousands of utterances. The utterances and labels may then be used to create a SLU model for an application. The result of this labeling phase is typically a graphical requirement document, namely, a call flow document, which may describe the details of the human-machine interaction. The call flow document may define prompts, error recovery strategies and routing destinations based on the SLU call-types. Once this document is completed, the development of a dialog application may begin. After field tests, results may be given to the UE expert, who then may refine the call-types, create a new annotation guide, retrain the labelers, redo the labels and create new labels or call-types from new data and rebuild the SLU model.

U.S. Patent Application No. ,entitled "SYSTEM AND METHOD FOR AUTOMATIC GENERATION OF A NATURAL LANGUAGE UNDERSTANDING MODEL," (Attorney Docket No. 2003-0059), filed on and herein incorporated by reference in its entirety, describes various tools for generating a Natural or Spoken Language Understanding model.

When models for an application are built, spoken dialog data, which may include utterance data, which may further include a category or verb, positive utterances, and negative utterances for the application may be stored in a library of reusable components and may be reused to bootstrap another application. The utterance data may be stored as part of a collection. A group of collections may be stored in a sector data set. The library is discussed in more detail below.

### Exemplary System

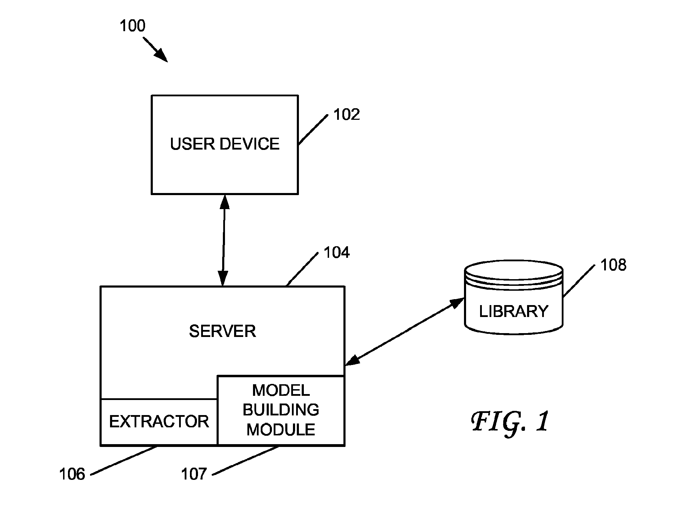

Fig. 1 illustrates an exemplary system 100 that may be used in implementations consistent with the principles of the invention. System 100 may include a user device 102, a server 104, an extractor 106, a model building module 107, and a library 108.

User device 102 may be a processing device such as, for example, a personal computer (PC), handheld computer, or any other device that may include a processor and memory. Server 104 may also be a processing device, such as, for example, a PC a handheld computer, or other device that may include a processor and memory. User device 102 may be connected to server 104 via a network, for example, the Internet, a Local Area Network (LAN), Wide Area Network (WAN), wireless network, or other type of network, or may be directly connected to server 104, which may provide a user interface (not shown), such as a graphical user interface (GUI) to user device 102. Alternatively, in some implementations consistent with the principles of the invention, user device 102 and server 104 may be the same device. In one implementation consistent with the principles of the invention, user device 102 may execute a Web browser application, which may permit user device 102 to interface with a GUI on server 104 through a network.

Server 104 may include an extractor for receiving indications of selected reusable components from user device 102 and for retrieving the selected reusable components from library 108. Model building module 107 may build a model, such as a SLU model or an ASR model or both the SLU model and the ASR model from the retrieved reusable components. Model building module 107 may reside on server 104, may be included as part of extractor 106, or may reside in a completely separate processing device from server 104.

Library 108 may include a database, such as, for example, a XML database, a SQL database, or other type of database. Library 108 may be included in server 104 or may be separate from and remotely located from server 104, but may be accessible by server 104 or extractor 106. Server 104 may include extractor 106, which may extract information from library 108 in response to receiving selections from a user. A request from a user may be specific, (e.g., "extract information relevant to requesting a new credit card"). Alternatively, extractor 106 may operate in an automated fashion in which it would use examples in library 108 to extract information from library 108 with only minimal guidance from the user, (e.g., "Extract the best combination of Healthcare and Insurance libraries and build a consistent call flow).

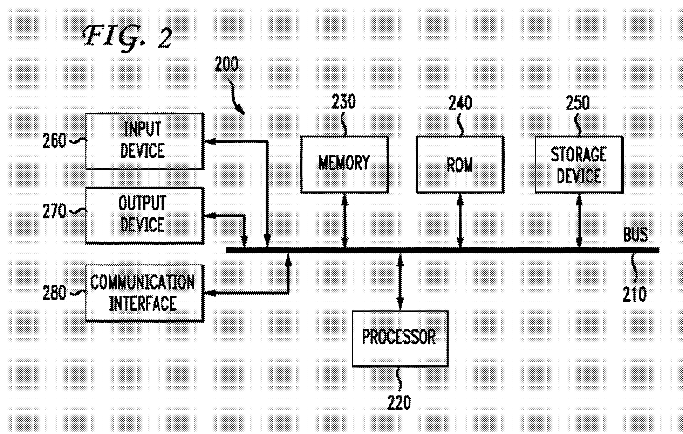

Fig. 2 illustrates an exemplary processing system 200 in which user device 102, server 104, or extractor 106 may be implemented. Thus, system 100 may include at least one processing system, such as, for example, exemplary processing system 200. System 200 may include a bus 210, a processor 220, a memory 230, a read only memory (ROM) 240, a storage device 250, an input device 260, an output device 270, and a communication interface 280. Bus 210 may permit communication among the components of system 200.

Processor 220 may include at least one conventional processor or microprocessor that interprets and executes instructions. Memory 230 may be a random access memory (RAM) or another type of dynamic storage device that stores information and instructions for execution by processor 220. Memory 230 may also store temporary variables or other intermediate information used during execution of instructions by processor 220. ROM 240 may include a conventional ROM device or another type of static storage device that stores static information and instructions for processor 220. Storage device 250 may include any type of media, such as, for example, magnetic or optical recording media and its corresponding drive.

Input device 260 may include one or more conventional mechanisms that permit a user to input information to system 200, such as a keyboard, a mouse, a pen, a microphone, a voice recognition device, etc. Output device 270 may include one or more conventional mechanisms that output information to the user, including a display, a printer, one or more speakers, or a medium, such as a memory, or a magnetic or optical disk and a corresponding disk drive. Communication interface 280 may include any transceiver-like mechanism that enables system 200 to communicate via a network. For example, communication interface 280 may include a modem, or an Ethernet interface for communicating via a local area network (LAN). Alternatively, communication interface 280 may include other mechanisms for communicating with other devices and/or systems via wired, wireless or optical connections.

System 200 may perform such functions in response to processor 220 executing sequences of instructions contained in a computer-readable medium, such as, for example, memory 230, a magnetic disk, or an optical disk. Such instructions may be read into memory 230 from another computer-readable medium, such as storage device 250, or from a separate device via communication interface 280.

### Reusable Library Components

Spoken dialog data are data from existing applications, which may be stored in a library of reusable components. The library of reusable components may include SLU models, ASR models, named entity grammars, manual transcriptions, ASR transcriptions, call-type labels, audio data (utterances), dialog level templates, prompts, and other reusable data.

The data may be organized in various ways. For instance, in an implementation consistent with the principles of the invention, the data may be organized by industrial sector, such as, for example, financial, healthcare, insurance, etc. Thus, for example, to create a new natural language spoken dialog system in the healthcare sector, all the library components from the healthcare sector could be used to bootstrap the new natural language spoken dialog system. Alternatively, in other implementations consistent with the principles of the invention the data may be organized by category (e.g., Service Queries, Billing Queries, etc.) or according to call-types of individual utterances, or by words in the utterances such as, for example, frequently occurring words in utterances.

Any given utterance may belong to one or more call-types. Call-types may be given mnemonic names and textual descriptions to help describe their semantic scope. In some implementations, call-types may be assigned attributes that may be used to assist in library management, browsing, and to provide a level of discipline to the call-type design process. Attributes may indicate whether the call-type is generic, reusable, or specific to a given application. Call-types may include a category attribute or at a lower level may be characterized by a "verb" attribute such as "Request, Report, Ask, etc." A given call-type may belong to a single industrial sector or to multiple industrial sectors. The UE expert may make a judgment call with respect to how to organize various application datasets into industrial sectors. Because the collection of utterances for any particular application is usually done in phases, each new application may have datasets from several data collection or time periods. Thus, each call-type may also have an attribute describing the data collection data set, such as, for example, a date and/or time of data collection.

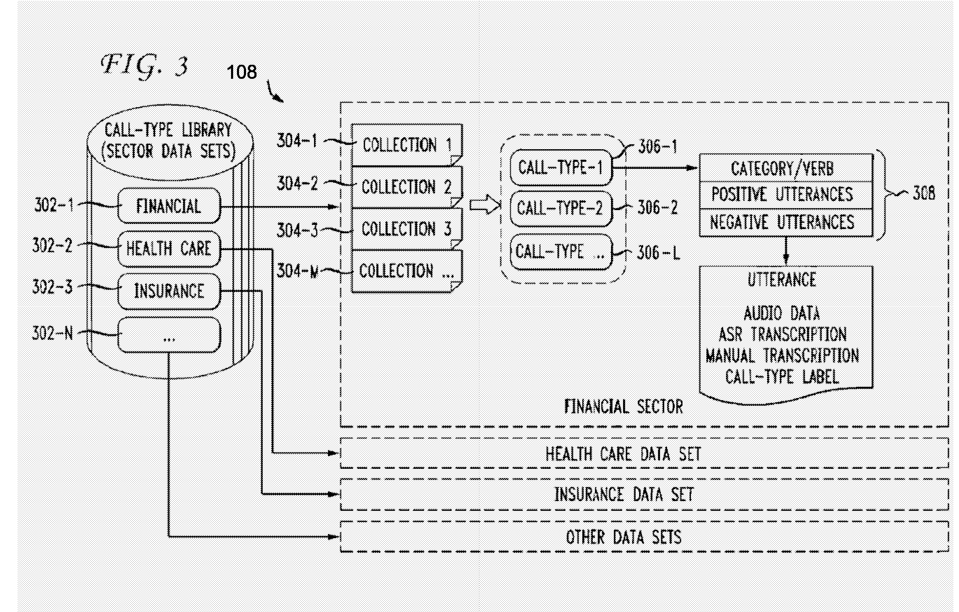

Fig. 3 illustrates an exemplary architecture of library 108 that may be used in implementations consistent with the principles of the invention. Library 108 may include a group of datasets 302-1, 302-2, 302-3, ... , 302-N (collectively referred to as 302) on a computer-readable medium. In one implementation, each of the datasets may include data for a particular industrial sector. For example, sector 302-1 may have data pertaining to a financial sector, sector 302-2 may have data pertaining to a healthcare sector, sector 302-3 may have data pertaining to an insurance sector, and sector 302-N may have data pertaining to another sector.

Each of sectors 302 may include a SLU model, an ASR model, and named entity grammars and may have the same data organization. An exemplary data organization of a sector, such as financial sector 302-1, is illustrated in Fig. 3. As previously mentioned, data may be collected in a number of phases. The data collected in a phase may be referred to as a collection. Financial sector 302-1 may have a number of collections 304-1, 304-2, 304-3, ..., 304-M (collectively referred to as 304). Each of collections 304 may share one or more call-types 306-1, 306-2, 306-3, ..., 306-L (collectively referred to as 306). Each of call-types 306 may be associated with utterance data 308. Each occurrence of utterance data 308 may include a category, for example, Billing Queries, or a verb, for example, Request or Report. Utterance data 308 may also include one or more positive utterance items and one or more negative utterance items. Each positive or negative utterance item may include audio data in the form of an audio recording, a manual or ASR transcription of the audio data, and one or more call-type labels indicating the one or more call-types 306 to which the utterance data may be associated.

One of ordinary skill in the art would understand that the audio data and corresponding transcriptions may be used to train an ASR model, and the call-type labels may be used to build new SLU models.

The labeled and transcribed data for each of data collections 304 may be imported into separate data collection databases. In one implementation consistent with the principles of the invention, the data collection databases may be XML databases (data stored in XML), which may keep track of the number of utterances imported from each natural language speech dialog application as well as data collection dates. XML databases or files may also include information describing locations of relevant library components on the computer-readable medium that may include library 108. In other implementations, other types of databases may be used instead of XML databases. For example, in one implementation consistent with the principles of the invention a relational database, such as, for example, a SQL database may be used.

The data for each collection may be maintained in a separate file structure. As an example, for browsing application data, it may be convenient to represent the hierarchical structure as a tree {category, verb, call-type, utterance items}. A call-type library hierarchy may be generated from the individual data collection databases and the sector database. The call-type library hierarchy may include sector, data collection, category, verb, call-type, utterance items. However, users may be interested in all of the call-types with "verb=Request" which suggest that the library may be maintained in a relational database. In one implementation that employs XML databases, widely available tools can be used, such as tools that support, for example, XML or XPath to render interactive user interfaces with standard Web browser clients. XPath is a language for addressing parts of an XML document. XSLT is a language for transforming XML documents into other XML documents.

In some implementations consistent with the principles of the invention, methods for building SLU models, methods for text normalization, feature extraction, and named entity extraction may be stored in a file, such as an XML file or other type of file, so that the methods used to build the SLU models may be tracked. Similarly, in implementations consistent with the principles of the invention, data that is relevant to building an ASR module or dialog manager may be saved. Exemplary Operation

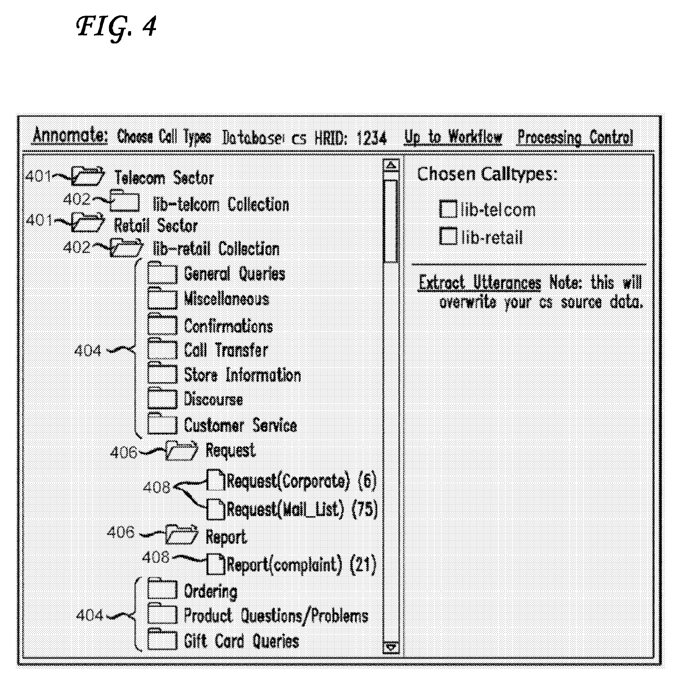

Fig. 4 illustrates an exemplary interface for extracting, from a library, spoken dialog data. A UE expert may be presented, via user device 102, with a hierarchical display that may list, for example, sector names 401 such as, for example, telecom sector and retail sector. Within each sector, collection names 402 may be displayed. Within each collection, categories 404 may be displayed. Within each category, call-type verbs 406 may be displayed. Within each call-type verb, call-types 708 may be displayed. The UE expert may browse and export any subset of the data. This tool may allow the UE expert to select utterances for a particular call-type in a particular data collection or the UE expert may extract all the utterances from any of the data collections. The UE expert may want to extract all the generic call-type utterances from all the different data collections to build a generic SLU model. A better approach might be to select all the utterances from all the data collections in a particular sector. This data may be extracted and used to generate a SLU model and/or an ASR model for that sector. As new data are imported for new data collections of a given sector, better SLU models and ASR models may be built for each sector. In this way, the SLU and ASR models for a sector may be iteratively improved as more applications are deployed. The UE expert may play a large role in building the libraries since the UE expert may need to make careful decisions based on knowledge of the business application when selecting which utterances/call-types to extract.

When building an application from data in a library, such as, for example, library 108, a sector data set, associated with a selected model from library 108, may be used to bootstrap a SLU model and/or an ASR model for the new application. In this case, all or part of the utterances from the sector data set may be used to build the SLU model and/or the ASR model for the new application.

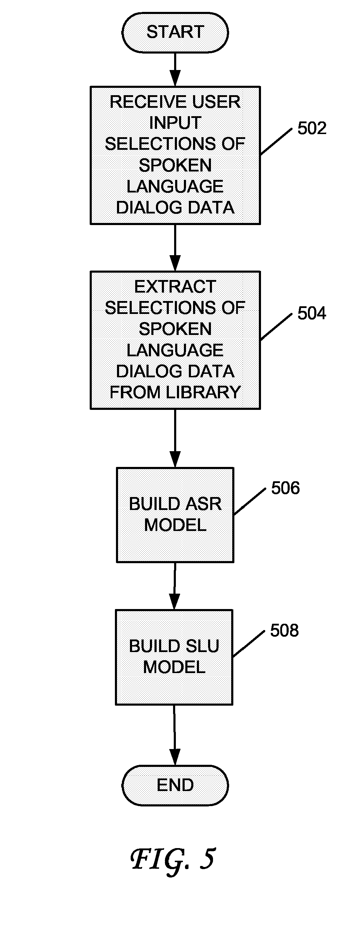

Fig. 5 is a flowchart that illustrates an exemplary process in an implementation consistent with the principles of the invention. The process may begin by receiving user input selections of spoken dialog data (act 502). This may occur as a result of the user or the UE expert making selections via an interface such as, for example, the hierarchical display shown in Fig. 4. Extractor 106 may extract the selections of spoken dialog data from library 108 (act 504). The spoken dialog data may include any of audible utterances, call-types, at least one SLU model, at least one ASR model, at least one category, at least one call-type-verb, and at least one named entity, as well as other data.

Next, model building module 107 may build an ASR model based on the extracted spoken dialog data. One of ordinary skill in the art would understand various methods for building the ASR model. Further, model building model 107 may build a SLU model based on the extracted spoken dialog data. One of ordinary skill in the art would understand various methods for building the SLU model.

The process illustrated in Fig. 5 is exemplary. In some implementations consistent with the principles of the invention, the acts may be performed in a different order. For example, act 508 may be performed before act 506. In other implementations, different acts, fewer acts or more acts may be performed. In yet another implementation, extractor 106 may perform acts 502-508.

### Conclusion

Although the above description may contain specific details, they should not be construed as limiting the claims in any way. Other configurations of the described embodiments of the invention are part of the scope of this invention. For example, alternative methods may be used to select data to be extracted from a library in other implementations consistent with the principles of the invention. For example, an alternative interface may be used to select data from a library. Accordingly, other embodiments are within the scope of the following claims.

## Claims

1. A method for using a library of reusable spoken language dialog components, the method comprising:
receiving user input indicating selections of spoken language dialog data from the library;
extracting the selections of spoken language dialog data from the library; and
building one of a Spoken Language Understanding (SLU) model or an Automatic Speech Recognition (ASR) model based on the selected spoken language dialog data.

2. The method of claim 1, further comprising:
bootstrapping a new spoken dialog system using the built SLU model or the built ASR model.

3. The method of claim 1 or 2, wherein:
the selections of spoken language dialog data include utterance data.

4. The method of any preceding claim, wherein:
the library includes the plurality of spoken language dialog data organized into a plurality of sectors, and optionally each of the sectors includes spoken dialog data pertaining to an industrial sector; or
each of the sectors includes at least one collection corresponding to utterance data collected during a particular timeframe.

5. The method of claim 4, wherein:
each of the at least one collection includes the corresponding utterance data stored according to at least one category, and optionally each of the at last one category includes corresponding utterance data stored according to at least one call-type.

6. A system for reusing spoken dialog components, the system comprising:
a processing device configured to receive user input selections indicating ones of a plurality of spoken dialog data stored in a library;
an extractor configured to extract the ones of the plurality of spoken dialog data; and
a model building module configured to build one of a Spoken Language Understanding (SLU) model or an Automatic Speech Recognition (ASR) model based on the extracted ones of the plurality of spoken dialog data.

7. The system of claim 6, wherein the extractor comprises the model building module.

8. The system of claim 6 or 7, wherein the extractor is included in the processing device.

9. The system of any of claims 6 to 8, wherein the processing device is further configured to bootstrap a new spoken dialog application using at least one of the SLU model or the ASR model.

10. The system of any of claims 6 to 9, further comprising the library of reusable spoken dialog components.

11. The system of any of claims 6 to 10, wherein the ones of the plurality of spoken dialog data include utterance data, and optionally the library includes the plurality of spoken dialog data organized into a plurality of sectors.

12. The system of claim 11, wherein each of the sectors includes spoken dialog data pertaining to a different industrial sector, or at least one collection including spoken dialog data collected during a particular timeframe.

13. The system of claim 12, wherein each of the at least one collection includes the corresponding spoken dialog data stored according to at least one category, and optionally each of the at least one category includes corresponding utterance data stored according to at least one call-type.

14. A machine-readable medium having recorded therein instructions for a processor, the instructions comprising:
a set of instructions for receiving user input indicating selections of spoken language dialog data from a library;
a set of instructions for extracting the selections of spoken language dialog data from the library; and
a set of instructions for building at least one of an Automatic Speech Recognition (ASR) model or a Spoken Language Understanding (SLU) model based on the selected spoken language dialog data.

15. The machine-readable medium of claim 14, further comprising:
a set of instructions for bootstrapping a new spoken dialog system using at least one of the ASR model or the SLU model.

16. The machine-readable medium of claim 14 or 15, wherein:
the selections of spoken language dialog data include utterance data.

17. The machine-readable medium of any of claims 14 to 16, wherein:
the library includes the plurality of spoken language dialog data organized into a plurality of sectors, and optionally each of the sectors includes spoken dialog data pertaining to an industrial sector or each of the sectors includes at least one collection corresponding to utterance data collected during a particular timeframe.

18. The machine-readable medium of claim 17, wherein:
each of the at least one collection includes the corresponding utterance data stored according to at least one category, and optionally each of the at last one category includes corresponding utterance data stored according to at least one call-type.

19. A system for reusing spoken dialog components, the system comprising:
means for receiving user input indicating selections of spoken language dialog data from a library of reusable components;
means for extracting the selections of spoken language dialog data from the library; and
means for building at least one of a Spoken Language Understanding (SLU) model or an Automatic Speech Recognition (ASR) model based on the selected spoken language dialog data.
